# EUROPEAN PATENT SPECIFICATION

(11) **EP 4 263 299 B1**
(45) Date of publication and mention of the grant of the patent: **06.11.2024**
(21) Application number: 21827605.3
(22) Date of filing: 10.12.2021
(51) Int. Cl.: B60S 3/04, B08B 17/02

(54) **LIQUID COLLECTION ARRANGEMENT FOR COLLECTING WASHING LIQUID AND METHOD OF MOUNTING THE LIQUID COLLECTION ARRANGEMENT**
FLÜSSIGKEITSSAMMELANORDNUNG ZUM SAMMELN VON WASCHFLÜSSIGKEIT UND VERFAHREN ZUR MONTAGE DER FLÜSSIGKEITSSAMMELANORDNUNG
AGENCEMENT DE RÉCUPÉRATION DE LIQUIDE PERMETTANT DE RÉCUPÉRER UN LIQUIDE DE LAVAGE ET PROCÉDÉ DE MONTAGE DE L'AGENCEMENT DE RÉCUPÉRATION DE LIQUIDE

(30) Priority: 16.12.2020 FI 20206309
(43) Date of publication of application: 25.10.2023
(73) Proprietor: Lazy Car Wash Oy, 15101 Lahti (FI)
(72) Inventor: RENQVIST, Karri, 00100 HELSINKI (FI); LINDELL, Patrik, 00220 HELSINKI (FI)
(74) Representative: Berggren Oy
(86) International application number: PCT/FI2021/050862
(87) International publication number: WO 2022/129688

(56) References cited:
- WO-A1-96/09945
- DE-A1- 3 834 537
- DE-U1- 20 217 615
- FR-A- 1 069 429
- GB-A- 2 423 239
- GB-A- 2 515 103

## Description

### Field of the invention

The invention relates to a liquid collection arrangement for collecting washing liquid that is used for washing the exterior of a four-wheeled vehicle, as defined in claim 1. The invention also concerns a method of mounting a liquid collection arrangement.

### Background of the invention

Cars can be washed in car washes, i.e. places specifically designed and built for washing cars. Car washes naturally have some advantages, such as they can be equipped with proper sewer systems for collecting the washing liquids used. However, for a user of a car, it would often be more convenient to have his or her car washed in a place he or she is visiting for some other reason. For instance, if the car is washed while the user of the car is shopping, eating at a restaurant or working out at a gym, this saves both time and the environment, as the need to drive to a car wash is eliminated.

A problem related to washing cars at places that are not built for that purpose is that it is usually not allowed or at least not desirable to let the detergent used for washing and the dirty water to flow into the ground. The problem can be solved by using a car wash mat, which can be placed below the vehicle and which is provided with raised edges for containing the water. However, also the car wash mats have some drawbacks. A significant problem relating to car wash mats is that the car must be driven onto the car wash mat. The car wash mats may be good enough for occasional washing of cars in domestic use, but they are not practical in professional use. Many people feel inconvenient if they need to give their car key to a person they do not know. Besides, the need to hand the key over both when leaving the car to a person providing car wash service and when picking up the car makes the process of buying the service more complicated, as the key must be handed over at a certain time or at least in a certain place.

Documents GB 2 423 239 A, GB 2 515 103 A and WO 96/09945 A1 disclose relevant prior art liquid collection arrangements for collecting washing liquid that is used for washing the exterior of a four-wheeled vehicle.

### Summary of the invention

An object of the invention is to provide an improved liquid collection arrangement for collecting washing liquid that is used for washing the exterior of a four-wheeled vehicle. The characterizing features of the liquid collection arrangement according to the present invention are given in claim 1. Another object of the invention is to provide a method of mounting a liquid collection arrangement. The characterizing features of the method according to the invention are given in the other independent claim.

The liquid collection arrangement according to the invention comprises a first liquid collection portion that can be arranged on a first side of the vehicle for collecting washing liquid running along the first side of the vehicle, a second liquid collection portion that can be arranged on a second side of the vehicle for collecting washing liquid running along the second side of the vehicle, a third liquid collection portion that can be arranged in front of the vehicle for collecting washing liquid running along the front of the vehicle, and a fourth liquid collection portion that can be arranged behind the vehicle for collecting washing liquid running along the rear of the vehicle. The liquid collection arrangement has a mounting mode, in which mode the first, second, third and fourth liquid collection portions can be arranged around the vehicle without moving the vehicle, and a use mode, in which mode the liquid collection portions surround the vehicle.

In the method according to the invention, a liquid collection arrangement defined above is mounted by arranging the first liquid collection portion on a first side of a vehicle, arranging the second liquid collection portion on a second side of the vehicle, arranging the third liquid collection portion in front of the vehicle, and arranging the fourth liquid collection portion behind the vehicle.

With the liquid collection arrangement according to the invention, the washing liquid can be effectively collected without a need to move the vehicle prior to the use of the liquid collection arrangement. This makes commercial car wash services more attractive to both the service provider and the customer. The customer feels more convenient, as he or she does not have to hand the car key over to the service provider. Both the service provider and the customer save time, as the customer does not need to arrive at a certain place, where the key can be handed over when leaving or picking up the car, and the service provider does not need to wait for the customer. For instance, in a parking garage or at a parking lot of a shopping mall, the customers of a car wash can leave their cars anywhere and order the service, which will be provided while they are shopping. Washing service can also easily be provided to people having their cars at curb parking.

According to an embodiment of the invention, the first, second, third and fourth liquid collection portions form a group of liquid collection portions and in the mounting mode said group of liquid collection portions is discontinuous in at least one point of said group for allowing mounting of the liquid collection arrangement around the vehicle without lifting the liquid collection arrangement over the vehicle. This makes mounting of the arrangement easier and the risk of scratching the paintwork of the vehicle is reduced.

According to an embodiment of the invention, the first, second, third and fourth liquid collection portions are arranged in two or more separate liquid collection parts that are connectable to each other. Alternatively, the first, second, third and fourth liquid collection portions can be arranged in a single liquid collection part and in the mounting mode of the arrangement the liquid collection portions form an open chain allowing mounting of the liquid collection arrangement around the vehicle without lifting the liquid collection arrangement over the vehicle.

According to an embodiment of the invention, the arrangement comprises connecting means for connecting said two or more separate liquid collection parts together or for forming a closed chain of said single liquid collection part. The connecting means can comprise, for instance, a Velcro and/or a zipper. The connecting means help keeping the liquid collection parts in place and ensure that the washing liquid is effectively collected.

According to an embodiment of the invention, the arrangement comprises a liquid discharge connection for allowing a suction device to be connected to the arrangement for discharging washing liquid from the liquid collection portions. According to an embodiment of the invention, all the liquid collection portions are connectable to a suction device via a common liquid discharge connection. The suction device can be a vacuum cleaner that can be used for suctioning liquids. The liquid discharge connection allows convenient discharge of liquid from the liquid collection portions.

According to an embodiment of the invention, one or more of the liquid collection portions is provided with means for conducting liquid collected by the liquid collection portion to a liquid discharge point. The means for conducting liquid can comprise a perforated hose or pipe. The hose or pipe can be connected to a suction device via a liquid discharge connection. It is thus not necessary to have a slope towards the liquid discharge connection, but the liquid can be suctioned to the liquid discharge connection by means of the vacuum generated by the suction device.

According to the invention, the arrangement comprises attachment means for attaching the first liquid collection portion and the second liquid connection portion to the tires and/or to the wheel arches of the vehicle. This allows the arrangement to be tightly arranged around the vehicle.

According to the invention, the attachment means are arranged in tire covering sections of the first liquid collection portion and the second liquid collection portion.

According to an embodiment of the invention, the arrangement comprises means for adjusting the length of the first liquid collection portion and the second liquid collection portion for adapting the liquid collection arrangement to vehicles of different lengths.

According to an embodiment of the invention, the arrangement comprises means for adjusting the length of the third liquid collection portion and the fourth liquid connection portion for adapting the liquid collection arrangement to vehicles of different widths.

### Brief description of the drawings

Embodiments of the invention are described below in more detail with reference to the drawings, in which
Fig. 1 shows a perspective view of a liquid collection arrangement according to an embodiment of the invention in a non-mounted state,
Fig. 2 shows a perspective view of the liquid collection arrangement of Fig. 1 in a partly mounted state,
Fig. 3 shows a perspective view of the liquid collection arrangement of Fig. 1 in a mounted state,
Fig. 4 shows a side view of a liquid collection arrangement according to another embodiment of the invention,
Fig. 5 shows a top view of the liquid collection arrangement of figures 1 to 3, and
Fig. 6 shows a partial cross-sectional view of the liquid collection arrangement of Fig. 5 taken along line A-A.

### Detailed description of embodiments of the invention

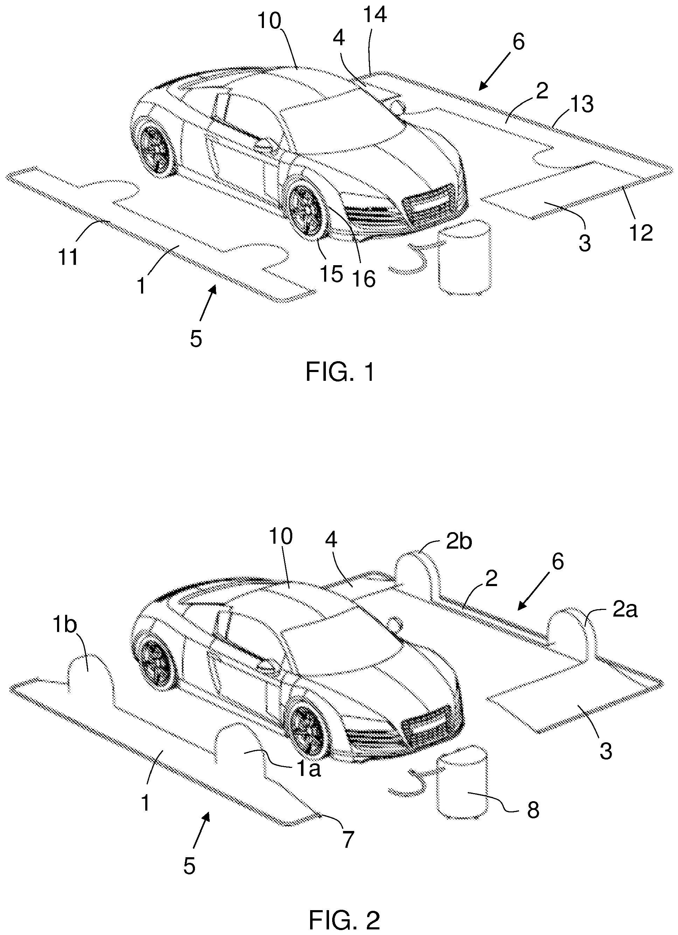

Figure 1 shows a liquid collection arrangement according to an embodiment of the invention in a non-mounted state. The liquid collection arrangement according to the invention is configured to collect water or other washing liquid used for washing the exterior of a four-wheeled vehicle 10. The invention is suitable in particular for passenger cars, vans and other similar vehicles.

The liquid collection arrangement comprises a first liquid collection portion 1 that can be arranged on a first side of the vehicle 10 for collecting washing liquid running along the first side of the vehicle 10. In the embodiments of the figures, the first side is the right side of the vehicle 10. The liquid collection arrangement further comprises a second liquid collection portion 2 that can be arranged on a second side of the vehicle 10 for collecting washing liquid running along the second side of the vehicle 10. In the embodiment of the figures, the second side is the left side of the vehicle 10.

The liquid collection arrangement further comprises a third liquid collection portion 3 that can be arranged in front of the vehicle 10 for collecting washing liquid running along the front of the vehicle 10, and a fourth liquid collection portion 4 that can be arranged behind the vehicle 10 for collecting washing liquid running along the rear of the vehicle 10.

The liquid collection arrangement has a mounting mode, in which mode the first, second, third and fourth liquid collection portions 1, 2, 3, 4 can be arranged around the vehicle 10 without moving the vehicle 10, and a use mode, in which mode the liquid collection portions 1, 2, 3, 4 surround the vehicle 10.

In the use mode, the liquid collection portions 1, 2, 3, 4 collect substantially all the washing liquid running along the exterior surfaces of the vehicle 10. The liquid collection arrangement thus allows washing of vehicles also in places, where it is not allowed to let the washing liquid flow into the ground for environmental or other reasons, such as for aesthetic reasons. For instance, in a parking garage it may be undesirable to have dirty water and scum on the floor, even though the water would eventually flow into a sewer. In the use mode, each of the liquid collection portions 1, 2, 3, 4 is configured to extend below the chassis of the vehicle 10. This ensures that the washing liquid is effectively collected and does not flow past the respective liquid collection portion 1, 2, 3, 4.

In the mounting mode, the liquid collection arrangement can be arranged around the vehicle 10 without moving the vehicle. It thus allows washing of vehicles in various places without a need for handing the key over from the user of the vehicle to a person providing a washing service and for returning the key after the washing. This allows washing services to be provided without physical meeting of the customer and the service provider and without a need to visit a particular place where the key is handed over. This allows existing car wash services to provide a better buying experience and allows establishing car wash services in places where they have not been possible or practical before.

The feature allowing the liquid collection arrangement to be arranged around the vehicle without moving the vehicle can be implemented in many different ways. In the embodiments of the figures, the liquid collection portions 1, 2, 3, 4 are arranged in two separate liquid collection parts 5, 6. The liquid collection portions 1, 2, 3, 4 could also be arranged in more than two separate liquid collection parts. For instance, each liquid collection portion 1, 2, 3, 4 could be arranged in a separate part. Alternatively, the liquid collection portions 1, 2, 3, 4 could be arranged in a single part, which, however, forms an open chain in the mounting mode. In all the above-mentioned options, the liquid collection portions 1, 2, 3, 4 form a group of liquid collection portions, which is in the mounting mode discontinuous at least in one point of said group.

The liquid collection portions 1, 2, 3, 4 could also be arranged in a single part forming a closed perimeter. However, such a part would need to be lifted over the vehicle 10, which would make the use of the liquid collection arrangement more difficult and would also cause a risk of scratching the paintwork of the vehicle when being mounted. Therefore, the liquid collection arrangement is preferably configured to be mountable without a need to lift the parts over the vehicle 10.

In the embodiments of the figures, the arrangement comprises a first liquid collection part 5 and a second liquid connection part 6. The first liquid collection portion 1 is arranged in the first liquid collection part 5 and the second liquid collection portion 2 is arranged in the second liquid collection part 6. Also the third liquid collection portion 3 and the fourth liquid collection portion 4 are arranged in the second liquid collection part 6. The liquid collection portions 1, 2, 3, 4 could be arranged in the two parts 5, 6 in many different ways. For instance, one of the third and the fourth liquid collection portions 3, 4 could be arranged in the first liquid collection part 5, and the other of the two liquid collection portions 3, 4 could be arranged in the second liquid collection part 6. Alternatively, part of the third liquid collection portion 3 could be arranged in the first liquid collection part 5 and the rest of the third liquid collection portion 3 could be arranged in the second liquid collection part 6. Similarly, part of the fourth liquid collection portion 4 could be arranged in the first liquid collection part 5 and the rest of the fourth liquid collection portion 4 could be arranged in the second liquid collection part 6. Still another option would be arranging for example the third liquid collection portion 3 and part of the first and second liquid collection portions 1, 2 in the first liquid collection part 5 and arranging the fourth liquid collection portion 4 and the rest of the first and the second liquid collection portions 1, 2 in the second liquid collection part 6.

The liquid collection arrangement can comprise connecting means for connecting the parts 5, 6 of the arrangement together. If the liquid collection portions 1, 2, 3, 4 are arranged in a single part that forms an open chain in the mounting mode, the arrangement can comprise connecting means for connecting the ends of the part together. The connecting means can comprise, for instance, a zipper and/or a Velcro.

The liquid collection portions 1, 2, 3, 4 of the liquid collection arrangement are preferably made of a flexible waterproof material. The material can be, for instance, waterproof woven or non-woven fabric. The parts of the liquid collection arrangement are thus light and easy to transport and mount. Preferably, the material is selected so that the liquid collection portions 1, 2, 3, 4 can be folded or creased. This allows easy storage and transport of the arrangement and also adjustment of the lengths of the liquid collection portions 1, 2, 3, 4.

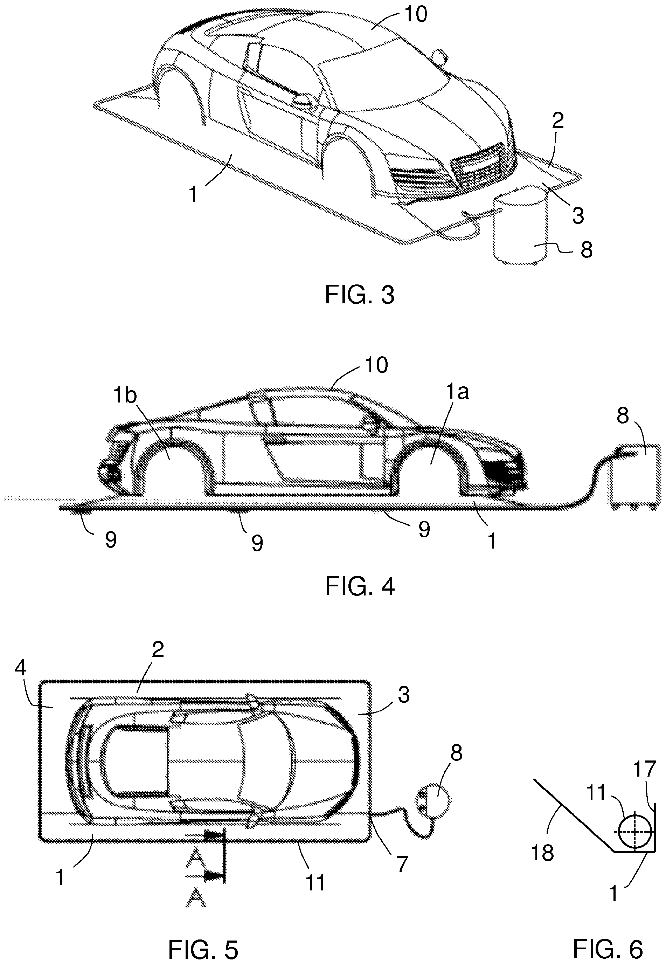

The liquid collection portions 1, 2, 3, 4 are trough-shaped in the use mode. The outer edges 17 of the liquid collection portions 1, 2, 3, 4 are thus raised for containing the washing liquid running into the liquid collection portions 1, 2, 3, 4, which can be best seen in the cross-sectional view of figure 6. In the use mode, each liquid collection portion 1, 2, 3, 4 is further configured so that the bottom 18 is inclined towards the outer edge. The washing liquid thus flows towards the outer edges of the liquid collection portions 1, 2, 3, 4. In figure 6, the inclination angle is exaggerated and even a relatively small angle would be sufficient for conducting the washing liquid to the right direction.

In the embodiments of the figures, each of the first liquid collection portion 1 and the second liquid collection portion 2 comprises a front tire covering section 1a, 2a and a rear tire covering section 1b, 2b. Each of the tire covering sections 1a, 1b, 2a, 2b is configured to be arrangeable between a tire 15 of a vehicle 10 and a respective wheel arch 16 of the vehicle 10. The tire covering sections 1a, 1b, 2a, 2b have at least two different functions. First, they ensure that the washing liquid running above the wheel arches 16 is effectively collected. Second, they can function as part of the attachment means of the liquid collection parts 5, 6. The liquid collection parts 5, 6 can be attached to the tires 15 and/or to the wheel arches 16. The tire covering sections 1a, 1b, 2a, 2b can be provided for example with rods or other elements that can be adapted to the shape and size of the tire 15 or the wheel arch 16. The elements could be, for instance, wires or spring-like parts.

The first and the second liquid collection parts 5, 6 can also be attached to each other. The arrangement can be provided for instance with at least one string, rope, wire or similar element for attaching the parts 5, 6 to each other. The string or other element can be inserted below the vehicle 10 from one side to the opposite side and attached to the liquid collection parts 5, 6 on both sides. For instance a rod or similar means can be used for inserting the string to the other side of the vehicle 10.

Instead of or in addition to attaching the liquid collection parts 5, 6 to each other and/or attaching the parts 5, 6 to the tires 15 and/or to the wheel arches 16, the liquid collection parts 5, 6 could be attached to the chassis of the vehicle 10 for example by means of magnets.

The dimensions of the liquid collection portions 1, 2, 3, 4 can be adjustable. The liquid collection arrangement can thus be arranged around vehicles of different sizes. For instance, the lengths of the first liquid collection portion 1 and the second liquid collection portion 2 can be adjusted to adapt the arrangement to vehicles with different lengths and wheelbases. Similarly, the length of the third liquid collection portion 3 and the fourth liquid collection portion can be adjusted for using the arrangement in connection with vehicles of different widths. The arrangement can comprise different means for adjusting the dimensions of the liquid collection portions 1, 2, 3, 4. For instance, the arrangement could be provided with strings for adjusting the lengths of the first and the second liquid collection portions between the front and rear tires 15 of the vehicle. Alternatively, the liquid collection portions 1, 2 could be provided with magnets and the liquid collection portions 1, 2 could be folded or creased between the tires 15, 16 and fixed to the shortened position by means of the magnets. The lengths of the third and fourth liquid collection portions 3, 4 could be adjusted in a similar way using strings or magnets.

The liquid collection portions 1, 2, 3, 4 could also have an airtight double-layer structure and the arrangement could be provided with one or more valves for applying vacuum within the double-layer structure. By applying vacuum to the structure, the liquid collection portions 1, 2, 3, 4 could be tightened to a predetermined shape around the vehicle 10.

In the embodiments of the figures, the liquid collection portions 1, 2, 3, 4 are provided with means for conducting the collected liquid to a liquid discharge point. The means for conducting the liquid can comprise perforated pipes or hoses 11, 12, 13, 14. The liquid can flow into the pipes through holes that are arranged in the walls of the pipes 11, 12, 13, 14. In the embodiments of the figures, each liquid collection portion 1, 2, 3, 4 is provided with a pipe. The pipes of two or more liquid collection portions 1, 2, 3, 4 can be integrated to each other. In the embodiments of the figures, the pipes 12, 13, 14 arranged in the second liquid collection part 6 are connected to each other. In the embodiments of the figures, the arrangement is provided with a single liquid discharge point. The discharge point is a liquid discharge connection 7. The liquid discharge connection 7 is connectable to a suction device, such as a vacuum cleaner 8 that is suitable for suctioning liquids. The suction device 8 creates vacuum in the pipes 11, 12, 13, 14 and the washing liquid collected by the liquid collection portions 1, 2, 3, 4 is thus conducted to the liquid discharge connection 7 and further into a tank of the suction device 8. Due to the liquid discharge connection 7 connectable to a suction device 8, the liquid collection arrangement can be used also in places where a sewer system is not available. The liquid collection arrangement could thus be utilized in washing vehicles at curb parking. Also, for instance in parking garages, vehicles can be washed anywhere, and the tank of the suction device 8 can be emptied into the sewer system as soon as it gets filled. There is thus no need to move the vehicles to be washed to a location where the washing liquid can be discharged directly into the sewer.

The pipes 11, 12, 13, 14 can be provided with connectors that allows the pipes of the first liquid collection part 5 and the second liquid collection part 6 to be connected to each other.

The pipes 11, 12, 13, 14 can have a telescopic structure to allow adjustment of the lengths of the pipes. Alternatively, part of the pipes 11, 12, 13, 14 could be replaced by hose sections allowing adjustment of the lengths of the liquid collection portions 1, 2, 3, 4.

In the embodiment of figure 4, the arrangement is provided with raising elements 9. The raising elements 9 can be used for sloping the liquid collection portions 1, 2, 3, 4 towards a liquid discharge point. The arrangement can be provided with raising elements of different heights to achieve an optimal slope for conducting the washing liquid towards the liquid discharge point. The raising elements 9 can be separate parts that can be arranged below the liquid collection portions 1, 2, 3, 4. The raising elements 9 are not necessary, but in many cases the washing liquid will be effectively conducted to the liquid discharge point by the vacuum created by the suction device 8.

The method of mounting the liquid collection arrangement comprises, depending on the features of the arrangement, one or more of the following steps:
- arranging at least one liquid collection part 5, 6 around a vehicle 10;
- attaching at least one liquid collection part 5, 6 to the vehicle 10;
- connecting two or more liquid collection parts 5, 6 to each other or using connection means for forming a closed chain of a single liquid collection part;
- adjusting the length of one or more liquid collection portions 1, 2, 3, 4;
- adjusting the length of one or more pipes 11, 12, 13, 14;
- connecting two or more pipes 11, 12, 13, 14 together;
- connecting a suction device 8 to a liquid discharge connection 7.

All the above-mentioned steps are not necessary in connection with all liquid collection arrangements according to the invention. Also, the chronological order of the steps can be different. For instance, the length of the liquid collection portions 1, 2, 3, 4 can be adjusted either before or after attaching the liquid collection parts 5, 6 to the vehicle 10. Also, the liquid collection parts 5, 6 can be connected to each other either before or after attaching the liquid collection parts 5, 6 to the vehicle 10.

It will be appreciated by a person skilled in the art that the invention is not limited to the embodiments described above, but may vary within the scope of the appended claims.

## Claims

1. A liquid collection arrangement for collecting washing liquid that is used for washing the exterior of a four-wheeled vehicle (10), the liquid collection arrangement comprising
- a first liquid collection portion (1) that can be arranged on a first side of the vehicle (10) for collecting washing liquid running along the first side of the vehicle (10),
- a second liquid collection portion (2) that can be arranged on a second side of the vehicle (10) for collecting washing liquid running along the second side of the vehicle (10),
- a third liquid collection portion (3) that can be arranged in front of the vehicle (10) for collecting washing liquid running along the front of the vehicle (10), and
- a fourth liquid collection portion (4) that can be arranged behind the vehicle (10) for collecting washing liquid running along the rear of the vehicle (10),
wherein the liquid collection arrangement has a mounting mode, in which mode the first, second, third and fourth liquid collection portions (1, 2, 3, 4) can be arranged around the vehicle (10) without moving the vehicle (10), and a use mode, in which mode the liquid collection portions (1, 2, 3, 4) surround the vehicle (10),
**characterized in that** the arrangement comprises attachment means for attaching the first liquid collection portion (1) and the second liquid connection portion (2) to the tires (15) and/or to the wheel arches (16) of the vehicle (10) and the attachment means are arranged in tire covering sections (1a, 1b, 2a, 2b) of the first liquid collection portion (1) and the second liquid collection portion (2).

2. A liquid collection arrangement according to claim 1, wherein the first, second, third and fourth liquid collection portions (1, 2, 3, 4) form a group of liquid collection portions and in the mounting mode said group of liquid collection portions is discontinuous in at least one point of said group for allowing mounting of the liquid collection arrangement around the vehicle (10) without lifting the liquid collection arrangement over the vehicle (10).

3. A liquid collection arrangement according to claim 1 or 2, wherein the first, second, third and fourth liquid collection portions (1, 2, 3, 4) are arranged in two or more separate liquid collection parts (5, 6) that are connectable to each other.

4. A liquid collection arrangement according to claim 1 or 2, wherein the first, second, third and fourth liquid collection portions (1, 2, 3, 4) are arranged in a single liquid collection part and in the mounting mode of the arrangement the liquid collection portions form an open chain allowing mounting of the liquid collection arrangement around the vehicle (10) without lifting the liquid collection arrangement over the vehicle (10).

5. A liquid collection arrangement according to claim 3 or 4, wherein the arrangement comprises connecting means for connecting said two or more separate liquid collection parts (5, 6) together or for forming a closed chain of said single liquid collection part.

6. A liquid collection arrangement according to claim 5, wherein the connecting means comprise a Velcro and/or a zipper.

7. A liquid collection arrangement according to any of the preceding claims, wherein the arrangement comprises a liquid discharge connection (7) for allowing a suction device (8) to be connected to the arrangement for discharging washing liquid from the liquid collection portions (1, 2, 3, 4).

8. A liquid collection arrangement according to claim 7, wherein all the liquid collection portions (1, 2, 3, 4) are connectable to a suction device (8) via a common liquid discharge connection (7).

9. A liquid collection arrangement according to any of the preceding claims, wherein one or more of the liquid collection portions (1, 2, 3, 4) is provided with means (11, 12, 13, 14) for conducting liquid collected by the liquid collection portion (1, 2, 3, 4) to a liquid discharge point.

10. A liquid collection arrangement according to claim 9, wherein the means for conducting liquid comprises a perforated hose or pipe.

11. A liquid collection arrangement according to any of the preceding claims, wherein the arrangement comprises means for adjusting the length of the first liquid collection portion (1) and the second liquid collection portion (2) for adapting the liquid collection arrangement to vehicles of different lengths.

12. A liquid collection arrangement according to any of the preceding claims, wherein the arrangement comprises means for adjusting the length of the third liquid collection portion (3) and the fourth liquid connection portion (4) for adapting the liquid collection arrangement to vehicles of different widths.

13. A method of mounting a liquid collection arrangement according to any of the preceding claims, wherein the method comprises the steps of
- arranging the first liquid collection portion (1) on a first side of a vehicle (10),
- arranging the second liquid collection portion (2) on a second side of the vehicle (10),
- arranging the third liquid collection portion (3) in front of the vehicle (10), and
- arranging the fourth liquid collection portion (4) behind the vehicle (10).

## Patentansprüche

1. Flüssigkeitssammelanordnung zum Sammeln von Waschflüssigkeit, die zum Waschen der Außenseite eines vierrädrigen Fahrzeugs (10) verwendet wird, wobei die Flüssigkeitssammelanordnung Folgendes umfasst:
- einen ersten Flüssigkeitssammelabschnitt (1), der an einer ersten Seite des Fahrzeugs (10) angeordnet werden kann, zum Sammeln von Waschflüssigkeit, die entlang der ersten Seite des Fahrzeugs (10) läuft,
- einen zweiten Flüssigkeitssammelabschnitt (2), der an einer zweiten Seite des Fahrzeugs (10) angeordnet werden kann, zum Sammeln von Waschflüssigkeit, die entlang der zweiten Seite des Fahrzeugs (10) läuft,
- einen dritten Flüssigkeitssammelabschnitt (3), der vor dem Fahrzeug (10) angeordnet werden kann, zum Sammeln von Waschflüssigkeit, die entlang der Vorderseite des Fahrzeugs (10) läuft, und
- einen vierten Flüssigkeitssammelabschnitt (4), der hinter dem Fahrzeug (10) angeordnet werden kann, zum Sammeln von Waschflüssigkeit, die entlang der Rückseite des Fahrzeugs (10) läuft,
wobei die Flüssigkeitssammelanordnung einen Montagemodus aufweist, in dem der erste, zweite, dritte und vierte Flüssigkeitssammelabschnitt (1, 2, 3, 4) um das Fahrzeug (10) herum angeordnet werden können, ohne das Fahrzeug (10) zu bewegen, und einen Nutzungsmodus, in dem die Flüssigkeitssammelabschnitte (1, 2, 3, 4) das Fahrzeug (10) umgeben,
**dadurch gekennzeichnet, dass** die Anordnung Befestigungsmittel zum Befestigen des ersten Flüssigkeitssammelabschnitts (1) und des zweiten Flüssigkeitsanschlussabschnitts (2) an den Reifen (15) und/oder an den Radkästen (16) des Fahrzeugs (10) umfasst und die Befestigungsmittel in Reifenabdeckabschnitten (1a, 1b, 2a, 2b) des ersten Flüssigkeitssammelabschnitts (1) und des zweiten Flüssigkeitssammelabschnitts (2) angeordnet sind.

2. Flüssigkeitssammelanordnung nach Anspruch 1, wobei der erste, zweite, dritte und vierte Flüssigkeitssammelabschnitt (1, 2, 3, 4) eine Gruppe von Flüssigkeitssammelabschnitten bilden und in der Montagebetriebsart die Gruppe von Flüssigkeitssammelabschnitten an mindestens einem Punkt der Gruppe unterbrochen ist, um die Montage der Flüssigkeitssammelanordnung um das Fahrzeug (10) herum zu ermöglichen, ohne die Flüssigkeitssammelanordnung über das Fahrzeug (10) anzuheben.

3. Flüssigkeitssammelanordnung nach Anspruch 1 oder 2, wobei der erste, zweite, dritte und vierte Flüssigkeitssammelabschnitt (1, 2, 3, 4) in zwei oder mehr separaten, miteinander verbindbaren Flüssigkeitssammelteilen (5, 6) angeordnet sind.

4. Flüssigkeitssammelanordnung nach Anspruch 1 oder 2, wobei der erste, zweite, dritte und vierte Flüssigkeitssammelabschnitt (1, 2, 3, 4) in einem einzigen Flüssigkeitssammelteil angeordnet sind und im Montagemodus der Anordnung die Flüssigkeitssammelabschnitte eine offene Kette bilden, die eine Montage der Flüssigkeitssammelanordnung um das Fahrzeug (10) herum ermöglicht, ohne die Flüssigkeitssammelanordnung über das Fahrzeug (10) zu heben.

5. Flüssigkeitssammelanordnung nach Anspruch 3 oder 4, wobei die Anordnung Verbindungsmittel zum Verbinden der zwei oder mehr separaten Flüssigkeitssammelteile (5, 6) miteinander oder zum Bilden einer geschlossenen Kette des einzelnen Flüssigkeitssammelteils umfasst.

6. Flüssigkeitssammelanordnung nach Anspruch 5, wobei die Verbindungsmittel einen Klettverschluss und/oder einen Reißverschluss umfassen.

7. Flüssigkeitssammelanordnung nach einem der vorhergehenden Ansprüche, wobei die Anordnung einen Flüssigkeitsablassanschluss (7) umfasst, um den Anschluss einer Saugvorrichtung (8) an die Anordnung zum Ablassen von Waschflüssigkeit aus den Flüssigkeitssammelabschnitten (1, 2, 3, 4) zu ermöglichen.

8. Flüssigkeitssammelanordnung nach Anspruch 7, wobei alle Flüssigkeitssammelabschnitte (1, 2, 3, 4) über einen gemeinsamen Flüssigkeitsablassanschluss (7) an eine Saugvorrichtung (8) anschließbar sind.

9. Flüssigkeitssammelanordnung nach einem der vorhergehenden Ansprüche, wobei einer oder mehrere der Flüssigkeitssammelabschnitte (1, 2, 3, 4) mit Mitteln (11, 12, 13, 14) zum Leiten der vom Flüssigkeitssammelabschnitt (1, 2, 3, 4) gesammelten Flüssigkeit zu einem Flüssigkeitsauslasspunkt versehen sind.

10. Flüssigkeitssammelanordnung nach Anspruch 9, wobei die Mittel zum Leiten der Flüssigkeit einen perforierten Schlauch oder ein perforiertes Rohr umfassen.

11. Flüssigkeitssammelanordnung nach einem der vorhergehenden Ansprüche, wobei die Anordnung Mittel zum Einstellen der Länge des ersten Flüssigkeitssammelabschnitts (1) und des zweiten Flüssigkeitssammelabschnitts (2) umfasst, um die Flüssigkeitssammelanordnung an Fahrzeuge unterschiedlicher Länge anzupassen.

12. Flüssigkeitssammelanordnung nach einem der vorhergehenden Ansprüche, wobei die Anordnung Mittel zum Einstellen der Länge des dritten Flüssigkeitssammelabschnitts (3) und des vierten Flüssigkeitsanschlussabschnitts (4) zum Anpassen der Flüssigkeitssammelanordnung an Fahrzeuge unterschiedlicher Breite umfasst.

13. Verfahren zum Montieren einer Flüssigkeitssammelanordnung nach einem der vorhergehenden Ansprüche, wobei das Verfahren die folgenden Schritte umfasst:
- Anordnen des ersten Flüssigkeitssammelabschnitts (1) auf einer ersten Seite eines Fahrzeugs (10),
- Anordnen des zweiten Flüssigkeitssammelabschnitts (2) auf einer zweiten Seite des Fahrzeugs (10),
- Anordnen des dritten Flüssigkeitssammelabschnitts (3) vor dem Fahrzeug (10) und
- Anordnen des vierten Flüssigkeitssammelabschnitts (4) hinter dem Fahrzeug (10).

## Revendications

1. Agencement de collecte de liquide pour collecter un liquide de lavage utilisé pour laver l'extérieur d'un véhicule à quatre roues (10), l'agencement de collecte de liquide comprenant
- une première partie de collecte de liquide (1) qui peut être disposée sur un premier côté du véhicule (10) pour collecter un liquide de lavage s'écoulant le long du premier côté du véhicule (10),
- une deuxième partie de collecte de liquide (2) qui peut être disposée sur un second côté du véhicule (10) pour collecter un liquide de lavage s'écoulant le long du second côté du véhicule (10),
- une troisième partie de collecte de liquide (3) qui peut être disposée à l'avant du véhicule (10) pour collecter un liquide de lavage s'écoulant le long de l'avant du véhicule (10), et
- une quatrième partie de collecte de liquide (4) qui peut être disposée derrière le véhicule (10) pour collecter un liquide de lavage s'écoulant le long de l'arrière du véhicule (10),
dans lequel l'agencement de collecte de liquide présente un mode de montage, dans lequel les première, deuxième, troisième et quatrième parties de collecte de liquide (1, 2, 3, 4) peuvent être disposées autour du véhicule (10) sans déplacer le véhicule (10), et un mode d'utilisation, dans lequel les parties de collecte de liquide (1, 2, 3, 4) entourent le véhicule (10),
**caractérisé en ce que** l'agencement comprend des moyens de fixation pour fixer la première partie de collecte de liquide (1) et la deuxième partie de collecte de liquide (2) aux pneus (15) et/ou aux passages de roue (16) du véhicule (10) et les moyens de fixation sont disposés dans des sections de recouvrement de pneu (1a, 1b, 2a, 2b) de la première partie de collecte de liquide (1) et de la deuxième partie de collecte de liquide (2).

2. Agencement de collecte de liquide selon la revendication 1, dans lequel les première, deuxième, troisième et quatrième parties de collecte de liquide (1, 2, 3, 4) forment un groupe de parties de collecte de liquide et, dans le mode de montage, ledit groupe de parties de collecte de liquide est discontinu en au moins un point dudit groupe pour permettre le montage de l'agencement de collecte de liquide autour du véhicule (10) sans soulever l'agencement de collecte de liquide au-dessus du véhicule (10).

3. Agencement de collecte de liquide selon la revendication 1 ou 2, dans lequel les première, deuxième, troisième et quatrième parties de collecte de liquide (1, 2, 3, 4) sont disposées dans deux parties de collecte de liquide séparées ou plus (5, 6) qui peuvent être reliées les unes aux autres.

4. Agencement de collecte de liquide selon la revendication 1 ou 2, dans lequel les première, deuxième, troisième et quatrième parties de collecte de liquide (1, 2, 3, 4) sont disposées dans une seule partie de collecte de liquide et, dans le mode de montage de l'agencement, les parties de collecte de liquide forment une chaîne ouverte permettant le montage de l'agencement de collecte de liquide autour du véhicule (10) sans soulever l'agencement de collecte de liquide au-dessus du véhicule (10).

5. Agencement de collecte de liquide selon la revendication 3 ou 4, dans lequel l'agencement comprend des moyens de liaison pour relier lesdites deux parties de collecte de liquide séparées ou plus (5, 6) ensemble ou pour former une chaîne fermée de ladite partie de collecte de liquide unique.

6. Agencement de collecte de liquide selon la revendication 5, dans lequel les moyens de liaison comprennent un velcro et/ou une fermeture à glissière.

7. Agencement de collecte de liquide selon l'une quelconque des revendications précédentes, dans lequel l'agencement comprend un raccord d'évacuation de liquide (7) permettant de relier un dispositif d'aspiration (8) à l'agencement pour évacuer un liquide de lavage hors des parties de collecte de liquide (1, 2, 3, 4).

8. Agencement de collecte de liquide selon la revendication 7, dans lequel toutes les parties de collecte de liquide (1, 2, 3, 4) peuvent être reliées à un dispositif d'aspiration (8) via une liaison d'évacuation de liquide commune (7).

9. Agencement de collecte de liquide selon l'une quelconque des revendications précédentes, dans lequel une ou plusieurs des parties de collecte de liquide (1, 2, 3, 4) sont pourvues de moyens (11, 12, 13, 14) pour conduire un liquide collecté par la partie de collecte de liquide (1, 2, 3, 4) vers un point d'évacuation de liquide.

10. Agencement de collecte de liquide selon la revendication 9, dans lequel le moyen de conduite de liquide comprend un tuyau ou un tube perforé.

11. Agencement de collecte de liquide selon l'une quelconque des revendications précédentes, dans lequel l'agencement comprend des moyens pour ajuster la longueur de la première partie de collecte de liquide (1) et de la deuxième partie de collecte de liquide (2) pour adapter l'agencement de collecte de liquide à des véhicules de différentes longueurs.

12. Agencement de collecte de liquide selon l'une quelconque des revendications précédentes, dans lequel l'agencement comprend des moyens pour ajuster la longueur de la troisième partie de collecte de liquide (3) et de la quatrième partie de collecte de liquide (4) pour adapter l'agencement de collecte de liquide à des véhicules de différentes largeurs.

13. Procédé de montage d'un agencement de collecte de liquide selon l'une quelconque des revendications précédentes, dans lequel le procédé comprend les étapes de
- disposition de la première partie de collecte de liquide (1) sur un premier côté d'un véhicule (10),
- disposition de la deuxième partie de collecte de liquide (2) sur un second côté du véhicule (10),
- disposition de la troisième partie de collecte de liquide (3) devant le véhicule (10), et
- disposition de la quatrième partie de collecte de liquide (4) derrière le véhicule (10).
